# EUROPÄISCHE PATENTSCHRIFT

(11) **EP 1 646 570 B1**
(45) Veröffentlichungstag und Bekanntmachung des Hinweises auf die Patenterteilung: **02.07.2008**
(21) Anmeldenummer: 04740839.8
(22) Anmeldetag: 09.07.2004
(51) Int. Cl.: B65G 1/00

(54) **KOMMISSIONIERPLATZ**
ORDER-PICKING STATION
POSTE DE PREPARATION DE COMMANDES

(30) Priorität: 26.08.2003 DE 10340143
(43) Veröffentlichungstag der Anmeldung: 19.04.2006
(60) Teilanmeldung: 06008472.0
(73) Patentinhaber: SSI Schäfer Peem GmbH, 8051 Graz (AT)
(72) Erfinder: SCHAEFER, Gerhard, 57290 Neunkirchen (DE)
(74) Vertreter: Wegener, Markus
(86) Internationale Anmeldenummer: PCT/EP2004/007553
(87) Internationale Veröffentlichungsnummer: WO 2005/030615

(56) Entgegenhaltungen:
- DE-A- 10 136 354
- DE-A- 10 200 077
- DE-U- 29 806 960
- PATENT ABSTRACTS OF JAPAN Bd. 0163, Nr. 66 (M-1291), 7. August 1992 (1992-08-07) -& JP 04 116001 A (ITOKI KOSAKUSHO CO LTD), 16. April 1992 (1992-04-16)

## Beschreibung

Die vorliegende Erfindung betrifft einen Kommissionierplatz, zu dem über eine Lagerbehälter-Förderstrecke Lagerbehälter transportierbar sind und von dem über eine Auftragsbehälter-Förderstrecke Auftragsbehälter, in die hinein von einer Kommissionierperson aus den Lagerbehältern Artikel kommissioniert werden, abtransportierbar sind, wobei der Kommissionierplatz einen Puffer für mehrere zu kommissionierende Auftragsbehälter aufweist, wobei die Auftragsbehälter mittels eines Shuttles in den Puffer ein- und/oder auslagerbar sind.

Ein solcher Kommissionierplatz ist im Stand der Technik gemäß der Druckschrift DE 102 00 077 A bekannt. Allgemein ist ein Kommissionierplatz in der DE 101 36 354 A1 gezeigt.

Ferner betrifft die Erfindung eine Kommissionieranlage.

Eine Kommissionieranlage ist allgemein in der DE 297 24 039 U1 beschrieben.

Im Stand der Technik sind Kommissionierplätze, insbesondere Kommissionieranlagen, bekannt, mit denen Behälter mit handhabbaren Waren bestückt werden können, die über eine Fördervorrichtung, wie zum Beispiel ein Förderband, zugeführt werden.

Die Behälter, in die kommissioniert wird, das heißt die mit Artikeln bestückt werden, werden im Nachfolgenden Auftragsbehälter genannt. Sie werden Auftragsbehälter genannt, da die in die Auftragsbehälter zu kommissionierenden Artikel oder Waren gemäß einem vorgegebenen Auftrag in den Auftragsbehälter kommissioniert werden. Ein Auftrag kann mehrere verschiedene Artikel umfassen, die dann in ein- und denselben Auftragsbehälter oder mehrere Auftragsbehälter kommissioniert werden.

Die Kommissionierung der Artikel erfolgt in der Regel an sogenannten Kommissionierplätzen. Ein Kommissionierplatz ist die Stelle, wo eine Kommissionierperson die Artikel in die Auftragsbehälter kommissioniert. Dazu entnimmt die Kommissionierperson die Artikel aus Lagerbehältern. Die Lagerbehälter werden über eine Lagerbehälter-Förderstrecke der Kommissionierperson zugeführt. Die Lagerbehälter-Förderstrecke kann eine Fördervorrichtung, etwa wie ein Förderband oder ähnliches, sein.

Die Lagerbehälter, aus denen heraus kommissioniert wird, werden über die Lagerbehälter-Förderstrecke aus einem Behälterlager zum Kommissionierplatz transportiert. Das Behälterlager umfasst eine Vielzahl von gefüllten Lagerbehältern, in denen die Gesamtheit der zur Kommissionierung bereitstehenden Artikel gelagert werden.

Oftmals müssen viele verschiedene Artikel aus den unterschiedlichsten Bereichen des Behälterlagers in denselben Auftragsbehälter kommissioniert werden, um den Auftrag abzuarbeiten. Dazu ist ein enormer logistischer Aufwand erforderlich.

Um die Effektivität einer Kommissionieranlage zu steigern, sind deshalb bereits zahlreiche Verbesserungsvorschläge gemacht worden.

Die bereits oben erwähnte DE 297 24 039 U1 schlägt beispielsweise eine Kommissionieranlage mit einem Sortierpuffer vor.

Diese Kommissionieranlage weist ein Behälterlager mit Fördervorrichtungen zum Transport der Lagerbehälter aus dem Behälterlager zu einer Mehrzahl von Kommissionierplätzen auf. Zwischen dem Behälterlager und den Kommissionierplätzen ist ein Verteilsystem zum Verteilen der Behälter auf die einzelnen Arbeitsplätze vorgesehen. Zwischen dem Verteilsystem und den Arbeitsplätzen wiederum ist ein Sortierpuffer angeordnet. In einem solchen Sortierpuffer können die Lagerbehälter vorsortiert werden, bevor sie dem Kommissionierplatz zugeführt werden.

Die DE 298 06 960 schlägt zur Verbesserung der Effizienz eines Kommissioniersystems vor, anstatt die Kommissionierperson mit dem Auftragsbehälter zu den Lagerbehältern im Lagerregal laufen zu lassen, die Lagerbehälter der Kommissionierperson am Kommissionierplatz zuzuführen. Ferner wird vorgeschlagen, dass am Kommissionierplatz eine Vielzahl von Kommissionierschächten eingerichtet werden. Über die Kommissionierschächte kann die Kommissionierperson die zu kommissionierenden Artikel in zu bestückende Auftragsbehälter leiten. Die Schächte bieten die Möglichkeit zum bequemen Einwurf und zur gleichzeitigen gezielten Zuführung der Artikel in die Auftragsbehälter. Ein Schacht verläuft schräg von oben nach unten mit einer Steilheit, die die Ware unter Schwerkrafteinwirkung abrutschen lässt. Am unteren Bereich der Schächte kann ein Verschluss vorgesehen sein, um eine Kommissionierung beginnen zu können, bevor der Auftragsbehälter unter dem Schacht angekommen ist. Optional können die eingeführten Artikel erfasst und registriert werden, um eine nachträgliche Kontrolle durchführen zu können.

Die oben erwähnte DE 101 36 354 A1 offenbart ein Verfahren und eine Anlage zum Kommissionieren mit einem Behälterregal und einem zugeordneten Regalbediengerät. Auch in diesem System werden einem Kommissionierplatz Lagerbehälter über eine Lagerbehälter-Förderstrecke zugeführt. Fertig kommissionierte Auftragsbehälter werden über eine Auftragsbehälter-Förderstrecke abtransportiert. Ferner wird ein Puffer für drei Auftragsbehälter offenbart. Leere Auftragsbehälter, die über eine Förderstrecke zum Kommissionierplatz hin transportiert werden, werden in einem Ausschleusebereich durch einen Schieber ausgeschleust. Der Schieber ist seitlich an der Förderstrecke angebracht und schiebt leere, zu kommissionierende Auftragsbehälter von der Förderstrecke in den Puffer. Für jeden der drei Plätze des Puffers, die zur Aufnahme eines Auftragsbehälters vorgesehen sind, wird jeweils ein Schieber an der Förderstrecke angebracht. Im Puffer selbst ist für jeden Auftragsbehälter jeweils eine weitere Vorrichtung vorgesehen, die einen gefüllten, fertig kommissionierten Auftragsbehälter automatisch zurück in die Förderstrecke schiebt, so dass der Auftragsbehälter den Puffer verlässt.

Trotz der Fülle an Vorschlägen, um die Effizienz, insbesondere die Kommissioniergeschwindigkeit, zu steigern, ist es wünschenswert, noch schneller kommissionieren zu können. Dabei sollte darauf geachtet werden, dass die Kommissionierperson angesichts der strengen gesetzlichen ergonomischen Anforderungen möglichst wenig belastet wird.

Es ist daher eine Aufgabe der vorliegenden Erfindung, die aus dem Stand der Technik bekannten Kommissionierplätze insofern zu verbessern, dass noch effizienter und schneller kommissioniert werden kann.

Diese Aufgabe wird durch einen Kommissionierplatz der eingangs erwähnten Art gelöst, bei dem das Shuttle zwischen einen Zulauf und einen Ablauf der Auftragsbehälter - Förderstrecke geschaltet ist und das Shuttle den Zulauf direkt mit dem Ablauf verbindet, um eine Förderstreckenschleife mit der Auftragsbehälter-Förderstrecke zu bilden.

Ferner wird diese Aufgabe durch eine Kommissionieranlage gelöst, die mit mindestens einem Kommissionierplatz gemäß der Erfindung ausgestattet ist.

Durch diese Maßnahme wird erreicht, dass die Auftragsbehälter über die Schleife aus dem Hauptfluss der Auftragsbehälter auskoppelbar sind, bevor sie den Kommissionierplatz erreichen. Dadurch lässt sich der Hauptfluss der Auftragsbehälter noch besser steuern, da die "bremsende" Wirkung des Kommissionierens in der Schleife und nicht im Hauptfluss stattfindet. Insbesondere wenn mehrere Kommissionierplätze vorgesehen sind, lässt sich eine Art von Vorsortierung der Auftragsbehälter durchführen, was ebenfalls die Kommissioniergeschwindigkeit erhöht.

Durch das Vorsehen eines Shuttles, das die Auftragsbehälter in den Puffer ein- und/oder auslagert, kann eine Kommissionierung wesentlich effizienter gestaltet werden. Das Shuttle ermöglicht es zum einen, dass viele Auftragsbehälter gleichzeitig im Puffer gehalten werden können. Die im Puffer befindlichen Auftragsbehälter müssen sich dabei nicht in dem Bereich befinden, den die Kommissionierperson mit ihren Armen abdecken kann, wenn sie während des Kommissioniervorgangs fest an einem Ort steht. Das Shuttle kann Auftragsbehälter, die außerhalb der Armreichweite der Kommissionierperson sind, in einen Bereich transportieren, der innerhalb der Armreichweite der Kommissionierperson oder im Bereich eines Schachtausganges liegt.

Ferner ist nur eine einzige Vorrichtung zum Hin- und Hertransportieren von Auftragsbehältern zwischen dem Puffer und der Auftragsbehälter-Förderstrecke erforderlich. Dadurch verringert sich die Anzahl der in einem Kommissioniersystem erforderlichen Elemente, die den reibungslosen Fluss der Behälter im System gewährleisten. Dies macht sich auch in einer einfacheren und weniger komplexen Steuerung des Gesamtsystems bemerkbar, da weniger Elemente im Gesamtsystem gesteuert werden müssen.

Erfindungsgemäß ist das Shuttle zwischen einen Zulauf und einen Ablauf der Auftragsbehälter-Förderstrecke geschaltet.

Dies ist deshalb von Vorteil, da so die Reihenfolge der Auftragsbehälter auf der Auftragsbehälter-Förderstrecke beeinflusst werden kann. Zum einen kann die Reihenfolge dadurch beeinflusst werden, dass das Shuttle bestimmte Auftragsbehälter gemäß einer vorbestimmten Ordnung aus dem Puffer holt und anschließend an den Ablauf der Auftragsbehälter-Förderstrecke abgibt. Zum anderen kann so beeinflusst werden, wann ein leerer Auftragsbehälter vom Zulauf durch das Shuttle abgeholt wird, um in den Puffer transportiert zu werden.

Ferner ist es bevorzugt, wenn das Shuttle mindestens ein Lastaufnahmemittel aufweist, mit dem mindestens ein Auftragsbehälter aufgenommen und/oder abgegeben werden kann.

Durch diese Maßnahme wird erreicht, dass das Shuttle schnell und effizient arbeitet. Das Shuttle kann einen oder mehrere Auftragsbehälter gleichzeitig aufnehmen oder abgeben. Ein Shuttle mit zwei Lastaufnahmemitteln kann gleichzeitig einen Auftragsbehälter vom Zulauf aufnehmen, während ein anderer, bereits gefüllter und fertig kommissionierter Auftragsbehälter aus dem Puffer an den Ablauf abgegeben wird.

Gemäß einer weiteren bevorzugten Ausführungsform werden die Auftragsbehälter statisch im Puffer gelagert.

Dies hat den Vorteil, dass keine komplizierte Steuerung und Vorplanung erforderlich ist, um die zu kommissionierenden Artikel ihrem entsprechenden Auftragsbehälter zuzuweisen. Die logistischen Anforderungen sind geringer. Die Planung des Kommissioniervorgangs wird einfacher.

Alternativ ist es bevorzugt, wenn die Auftragsbehälter dynamisch im Puffer gelagert sind.

Bei einer dynamischen Lagerung der Auftragsbehälter im Puffer, das heißt, die Auftragsbehälter können ein- oder mehrmals ihren Platz im Puffer während ihres Kommissioniervorgangs wechseln, kann die Geschwindigkeit des Gesamtsystems gesteigert werden, da beispielsweise Auftragsbehälter, die im Puffer weit vom Kommissionierplatz entfernt sind, immer näher in den direkten Zugriffsbereich der Kommissionierperson gebracht werden können.

Gemäß einer anderen Ausführungsform weist der Puffer zwei Bereiche zur Aufnahme von jeweils wenigstens einem Auftragsbehälter auf, zwischen denen das Shuttle beweglich angeordnet ist.

Dadurch wird erreicht, dass das Shuttle schneller arbeiten kann. So kann zum Beispiel ein fertig kommissionierter Auftragsbehälter des ersten Bereichs vom Shuttle aufgenommen werden und ein leerer Auftragsbehälter vom Shuttle an den Puffer abgegeben werden. Bei einem Shuttle, das lediglich einen Auftragsbehälter aufnehmen kann, erfolgt dieser Vorgang sequenziell, wobei der leere Auftragsbehälter zuerst abgegeben wird. Bei einem Shuttle, das mehrere Auftragsbehälter aufnehmen kann, kann dieser Vorgang auch simultan erfolgen.

Es hat sich ferner als vorteilhaft herausgestellt, wenn der Kommissionierplatz mehrere Kommissionierschächte aufweist, durch die Artikel jeweils in einen der Auftragsbehälter leitbar sind.

Der Vorteil dabei ist, dass die Auftragsbehälter auch außerhalb der Armreichweite der Kommissionierperson im Puffer positioniert werden können. Durch die Kommissionierschächte, deren Öffnungen in Armreichweite der Kommissionierperson liegen, können Artikel über längere Strecken zu einem entsprechenden Auftragsbehälter geleitet werden. Dabei ist es insbesondere von Vorteil, wenn der Kommissionierschacht eine Neigung aufweist, das heißt, wenn der Auftragsbehälter sich auf einem niedrigeren Niveau als die Öffnung des Kommissionierschachts befindet.

Außerdem ist es von Vorteil, wenn jedem Auftragsbehälter des Puffers jeweils ein einziger Kommissionierschacht zugeordnet ist.

Dadurch wird die Zuordnung zwischen Öffnung eines Kommissionierschachts und zugehörigem Auftragsbehälter vereinfacht.

Gemäß einer weiteren Ausführungsform werden die Auftragsbehälter am Kommissionierplatz vollständig fertig kommissioniert.

Durch diese Maßnahme wird erreicht, dass die Auftragsbehälter nicht zwischen verschiedenen Kommissionierplätzen hin und her transportiert werden müssen, was sich in einer höheren Dauer des Kommissioniervorgangs äußern würde, was nachteilig wäre.

Vorteilhaft ist auch, wenn der Kommissionierplatz ferner eine Korrektur-Förderstrecke zum Nachkommissionieren fehlerhaft kommissionierter Auftragsbehälter aufweist, die den Griffbereich der Kommissionierperson durchläuft.

Dadurch kann erreicht werden, das der fehlerhaft kommissionierte Auftragsbehälter einem Kommissionierplatz nicht erneut zum Nachkommissionieren zugeführt werden muss, was länger dauern würde. Vielmehr kann dieselbe Kommissionierperson, die den Fehler verursacht hat, den Fehler vor Ort beheben, wodurch der Gesamtkommissioniervorgang (des Systems) beschleunigt wird.

Gemäß einer weiteren Ausführungsform ist der Kommissionierplatz mit einer Einlagerungs-Förderstrecke verbunden, über die dem Kommissionierplatz Einlagerungsbehälter zuführbar sind, um Lagerbehälter, die sich auf der Lagerbehälter-Förderstrecke befinden, wieder aufzufüllen.

Durch diese Maßnahme wird erreicht, dass in Leerlaufphasen, in denen die Kommissionierperson keine Artikel in Auftragsbehälter kommissioniert bzw. kommissionieren kann, die Kommissionierperson Lagerbehälter wieder auffüllen kann. Beispielsweise kann ein bestimmter Artikel während des Gesamtkommissionierungsvorgangs vollständig aufgebraucht werden, das heißt, er ist nicht mehr im Behälterlager erhältlich. Dies kann dann von einer dem Kommissioniersystem überlagerten Steuerung, wie zum Beispiel einem Computer oder einem Großrechner, erfasst werden. In Reaktion darauf kann ein Einlagerungsbehälter, der die dem Behälterlager fehlenden Artikel enthält, über eine Einlagerungs-Förderstrecke dem Kommissionierplatz zugeführt werden. Von dort kann die Kommissionierperson einen "leeren" Lagerbehälter wieder befüllen, so dass der Artikel wieder erhältlich ist.

Gemäß einer weiteren bevorzugten Ausführungsform ist das Shuttle entlang einer Shuttlegasse bewegbar.

Dadurch kann das Shuttle weite Wege im Puffer zurücklegen. Außerdem kann das Shuttle zwei Bereiche des Puffers gleichzeitig bedienen, nämlich jeweils die, die sich seitlich von der Shuttlegasse befinden.

Ferner ist es bevorzugt, wenn ein einziges Shuttle für mehrere Puffer zuständig ist.

Durch diese Maßnahme kann erreicht werden, dass die Anzahl der Elemente des Gesamtkommissioniersystems weiter verringert wird.

Dadurch können Kosten gesenkt und die Planung des Gesamtkommissionierungsvorgangs vereinfacht werden.

Weitere Vorteile und Merkmale der Erfindung ergeben sich aus der nachfolgenden Beschreibung eines Ausführungsbeispiels anhand der Zeichnungen. Darin zeigen:
- Figur 1: einen Kommissionierplatz gemäß dem Stand der Technik, der einen Puffer für mehrere Auftragsbehälter aufweist;
- Figur 2: einen weiteren Kommissionierplatz gemäß dem Stand der Technik, der Kommissionierschächte aufweist;
- Figur 3: eine schematische Darstellung eines Kommissionierplatzes gemäß der vorliegenden Erfindung;
- Figur 4: eine schematische Darstellung einer Kommissionieranlage, die einen Kommissionierplatz gemäß der vorliegenden Erfindung aufweist; und
- Figur 5: eine schematische, perspektivische Ansicht eines Teils einer weiteren Ausführungsform eines Kommissionierplatzes gemäß der vorliegenden Erfindung.

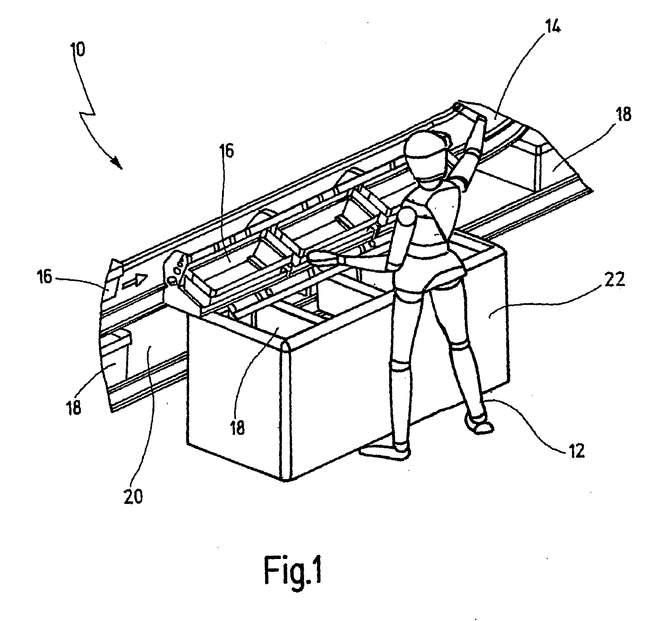

Figur 1 zeigt schematisch einen Kommissionierplatz gemäß dem Stand der Technik, der allgemein mit der Bezugsziffer 10 bezeichnet wird.

Der Kommissionierplatz 10 wird von einer Kommissionierperson 12 bedient. Über eine Lagerbehälter-Förderstrecke 14 werden Lagerbehälter 16 zum Kommissionierplatz 10 transportiert. Unterhalb der Lagerbehälter-Förderstrecke 14 werden Auftragsbehälter 18 über eine Auftragsbehälter-Förderstrecke 20 zum Kommissionierplatz 10 hin und davon weg transportiert.

Ferner weist der Kommissionierplatz 10 einen Puffer 22 für die Auftragsbehälter 18 auf. Der hier gezeigte Puffer 22 kann drei Auftragsbehälter 18 aufnehmen. Dazu werden die (leeren) Auftragsbehälter 18 von der Auftragsbehälter-Förderstrecke 20 kommend durch einen (hier nicht dargestellten) Schieber in einen der Plätze des Puffers 22 hineingeschoben. Der Schieber ist seitlich zur Auftragsbehälter-Förderstrecke und gegenüber einem Pufferplatz angeordnet. Für jeden Pufferplatz ist ein separater Schieber erforderlich.

Um im Puffer befindliche Auftragsbehälter 18 wieder auf die Auftragsbehälter-Förderstrecke 20 zu befördern, weist der Puffer 22 pro Pufferplatz jeweils eine weitere Vorrichtung auf, die den entsprechenden Auftragsbehälter 18 auf die Auftragsbehälter-Förderstrecke 20 schiebt.

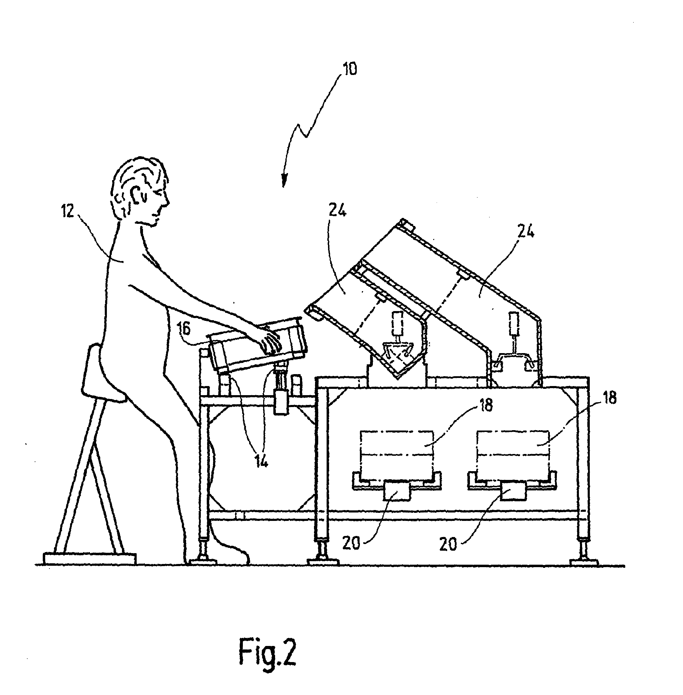

Ein weiterer Kommissionierplatz 10 gemäß dem Stand der Technik ist schematisch in einer Seitenansicht in der Figur 2 gezeigt.

Der Kommissionierplatz 10 der Figur 2 weist ebenfalls eine Lagerbehälter-Förderstrecke 14 auf, über die Lagerbehälter 16 zum Kommissionierplatz 10 transportiert werden. Eine Kommissionierperson 12 kann dann in den Lagerbehälter 16 greifen, um von dort einen (nicht dargestellten) zu kommissionierenden Artikel zu entnehmen. Der entnommene Artikel wird anschließend in einen Kommissionierschacht 24 gegeben, von wo aus er in einen Auftragsbehälter 18 geleitet wird.

Bei dem Kommissionierplatz 10 der Figur 2 sind mehrere Kommissionierschächte 24 vorgesehen. Jedem Auftragsbehälter 18 sind jedoch zwei nebeneinander angeordnete Kommissionierschächte 24 zugeordnet.

Die Auftragsbehälter 18 befinden sich während der Kommissionierung permanent auf der Auftragsbehälter-Förderstrecke 20, und werden sequentiell kommissioniert.

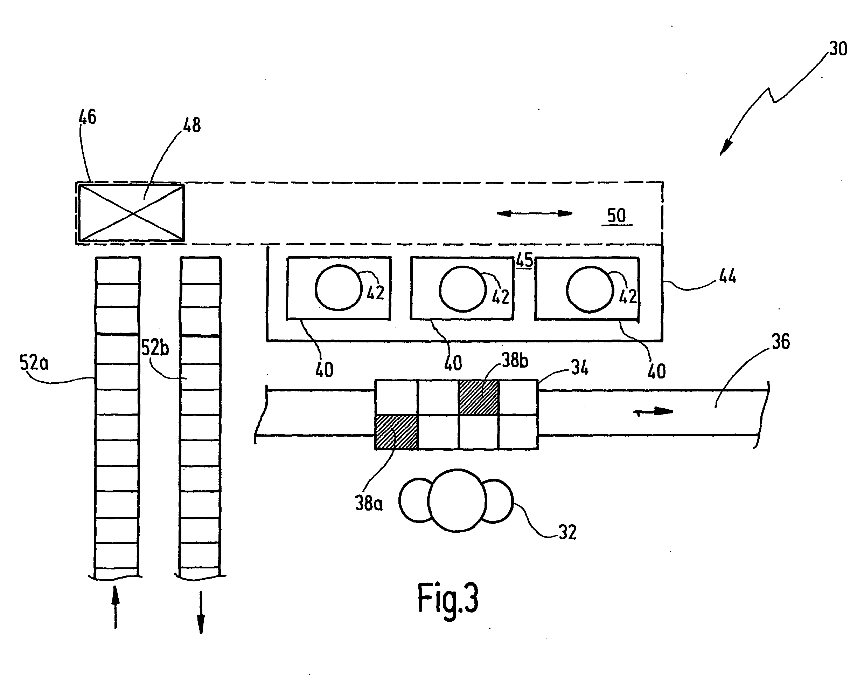

Figur 3 zeigt schematisch einen Kommissionierplatz gemäß einer ersten Ausführungsform der vorliegenden Erfindung, wobei ein Kommissionierplatz gemäß der Erfindung allgemein mit der Bezugsziffer 30 bezeichnet werden wird.

Der Kommissionierplatz 30 wird von einer Kommissionierperson 32 bedient. Die Kommissionierperson 32 bekommt Lagerbehälter 34 aus einem Behälterregalsystem (nicht gezeigt) über eine Lagerbehälter-Förderstrecke 36 geliefert.

In dem in Figur 3 gezeigten Beispiel enthält der Lagerbehälter 34 zwei zu kommissionierende Artikel 38a und 38b. Die restlichen Plätze des hier exemplarisch dargestellten Lagerbehälters 34 sind bereits leer. Die Kommissionierperson 20 kann dann je nach Kommissionierauftrag einen der oder beide Artikel 38a und 38b entnehmen, um sie in einen Auftragsbehälter 40 zu kommissionieren.

Vorzugsweise weist der Kommissionierplatz 30 auch Kommissionierschächte 42 auf, ähnlich den Kommissionierschächten 24 der Figur 2. In der Figur 3 sind lediglich die verschließbaren Auslassöffnungen der Kommissionierschächte 42 schematisch angedeutet, die sich über den Auftragsbehältern 40 befinden. Die Auftragsbehälter 40 selbst befinden sich hier in einem Puffer 44 für Auftragsbehälter. Der Puffer 44 kann beispielsweise gegenüber der Kommissionierperson 32 und entlang der Lagerbehälter-Förderstrecke 36 angeordnet sein.

Der Puffer 44 wird mittels eines einzigen, so genannten Shuttles 46 "bedient". Das Shuttle 46 kann ein Lastaufnahmemittel 48 aufweisen. Das Shuttle 46 ist entlang einer Shuttlegasse 50 verfahrbar gelagert. Die Shuttlegasse 50 ist auf der Seite des Puffers 44 angeordnet, die der Seite gegenüberliegt, die an die Lagerbehälter-Förderstrecke 36 angrenzt. Eine andere Anordnung der Shuttlegasse 50, des Puffers 44 und der Lagerbehälter-Förderstrecke 36 zueinander ist jedoch ebenfalls möglich.

Die in der Figur 3 dargestellte Shuttlegasse 50 erstreckt sich an einer Seite, hier der linken, über die Länge des Puffers 44 hinaus. Dort grenzt die Shuttlegasse 50 an einen Zulauf 52a und einen Ablauf 52b einer allgemein mit der Bezugsziffer 52 bezeichneten Auftragsbehälter-Förderstrecke. Über den Zulauf 52a werden leere Auftragsbehälter 40 in Richtung der Shuttlegasse 50 transportiert. Von dort aus können sie vom Shuttle 46 abgeholt werden, um vom Shuttle 46 auf einen der Plätze im Puffer 44 abgestellt zu werden. Die über den Zulauf 52a zugeführten Auftragsbehälter 40 sind in der Regel leer, können aber auch bereits teilweise vorgefüllt sein.

Über den Ablauf 52b werden fertig kommissionierte Auftragsbehälter 40 abtransportiert. Dazu werden die fertig kommissionierten Auftragsbehälter 40 mittels des Shuttles 46 aus dem Puffer 44 abgeholt und an den Ablauf 52b abgegeben.

Man beachte, dass bei dem in der Figur 3 dargestellten Kommissionierplatz 30 lediglich ein einziges Shuttle 46 den Transport der Auftragsbehälter 40 zwischen dem Puffer 44 und der Auftragsbehälter-Förderstrecke 52, und umgekehrt, bewerkstelligt.

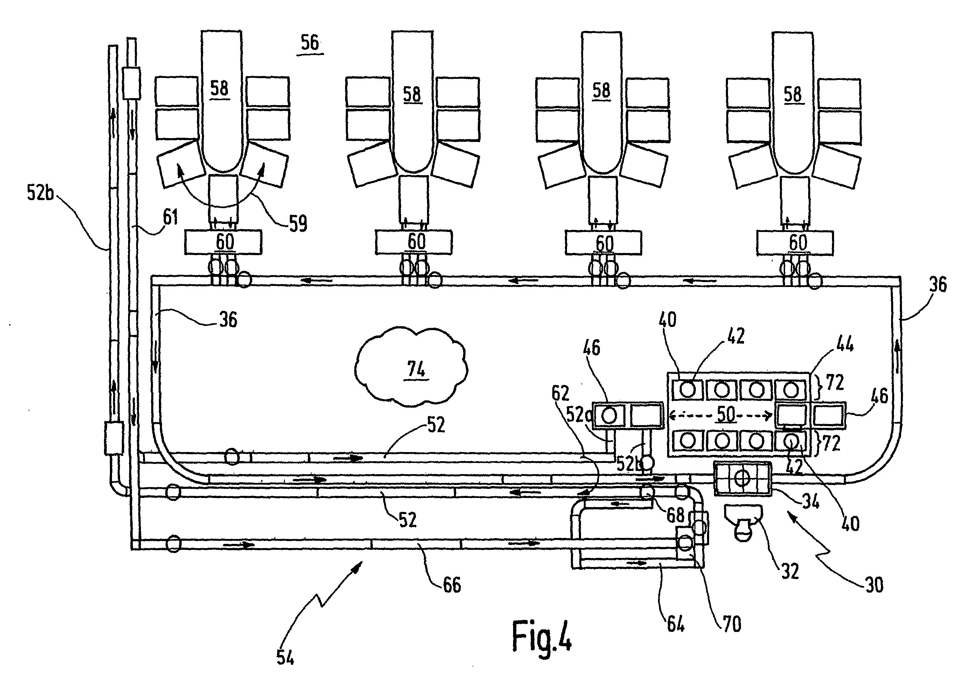

Figur 4 zeigt schematisch eine Kommissionieranlage, die allgemein mit der Bezugsziffer 54 bezeichnet ist.

Die Kommissionieranlage 54 weist eine zweite Ausführungsform eines Kommissionierplatzes 30 gemäß der vorliegenden Erfindung auf, auf den nachfolgend noch genauer eingegangen werden wird.

Die Lagerbehälter 34 werden in einem Behälterlager gelagert, das allgemein mit der Bezugsziffer 56 bezeichnet ist. Das Behälterlager 56 kann ein oder mehrere Karusselle 58 oder andere Arten von Behälterlagern (z.B. mit Regalbediengeräten) umfassen. Die Karusselle 58 weisen (nicht dargestellte) Fächer auf, in denen die Lagerbehälter 34 gelagert werden. Dabei können mehrere Fächer übereinander angeordnet sein. Die Fächer können in jeder beliebigen Richtung um die Karusselle 58 gedreht werden, wie es durch einen Pfeil 59 angedeutet ist. Vor den Karussellen 58 ist jeweils eine Vorzone 60 angeordnet, die einen (nicht dargestellten) Lift aufweisen kann. Mittels des Lifts lassen sich Lagerbehälter 34 aus Fächern unterschiedlicher Höhe holen und auf das Niveau der Lagerbehälter-Förderstrecke 36 bringen. Die Lagerbehälter 34 werden dann mittels geeigneter Einrichtungen auf die geschlossene Lagerbehälter-Förderstrecke 36 befördert, auf der sie in Richtung des Kommissionierplatzes 30 transportiert werden.

Leere Auftragsbehälter 40 werden über einen Zulauf 52a zum Kommissionierplatz 30 hin und über einen Ablauf 52b vom Kommissionierplatz 30 weg transportiert.

Der Zulauf 52a und der Ablauf 52b bilden in Verbindung mit dem Shuttle 46 eine Förderstreckenschleife, die mit einem Pfeil 62 angedeutet ist. Die Förderstreckenschleife 62 ist hier mit einer Hauptförderstrecke 61 verbunden. Über die Hauptförderstrecke 61 können leere Auftragsbehälter 40 zum Kommissionierplatz 30 hin transportiert und volle Einlagerungsbehälter 70 zu einer Korrektur-Förderstrecke 64 hin transportiert werden.

Die Korrektur-Förderstrecke 64 grenzt an eine Einlagerungs-Förderstrecke 66, über die die Einlagerungsbehälter 70 von der Hauptförderstrecke 61 an die Korrektur-Förderstrecke 64 angrenzend geliefert werden. Die Korrektur-Förderstrecke 64 befindet sich vorzugsweise in Reichweite der Arme der Bedienperson 32 und erfüllt mehrere Funktionen.

Eine erste Funktion der Korrektur-Förderstrecke 64 ist es, fehlerhaft kommissionierte Auftragsbehälter 40 zur Nachkommissionierung zur Kommissionierperson 32 zu transportieren. Dazu wird ein fehlerhaft kommissionierter Auftragsbehälter 40 vom Shuttle 46 aus dem Puffer 44 geholt und an den Ablauf 52b abgegeben. Der Ablauf 52b ist an einem Knotenpunkt 68 mit der Korrektur-Förderstrecke 64 verbunden. Die Förderstrecke 64 beginnt und endet hier am Knoten 68. Der fehlerhaft kommissionierte Auftragsbehälter 40 wird von dem Ablauf 52b über den Knoten 68 in die Korrektur-Förderstrecke 64 eingeleitet, um in Reichweite der Kommissionierperson 32 gebracht zu werden. Dort angelangt, kann er von der Bedienperson 32 nachkommissioniert werden, indem zum Beispiel ein Artikel, der im Auftragsbehälter 40 zuviel ist, aussortiert oder in einen noch oder wieder bereitstehenden Lagerbehälter 34 oder in einen entsprechenden Einlagerungsbehälter 70 auf der Einlagerungsstrecke 66 gelegt wird.

Sollte in einem fehlerhaft kommissionierten Auftragsbehälter 40 ein Artikel fehlen, so kann die Kommissionierperson 32 den Artikel aus einem Lagerbehälter 34 entnehmen, der über die Lagerbehälter-Förderstrecke 36 an den Kommissionierplatz 30 transportiert wurde.

Nachdem der fehlerhaft kommissionierte Auftragsbehälter 40 nachkommissioniert wurde, wird er über die Korrektur-Förderstrecke 64 in Richtung des Knotens 68 transportiert. Am Knoten 68 wird der nachkommissionierte Auftragsbehälter 40 wieder in den Ablauf 52b eingegliedert, um in den ursprünglichen Kreislauf zurückzukehren.

Auf ähnliche Weise kann ein fehlerhaft kommissionierter Auftragsbehälter 40 nachkommissioniert werden, bei dem sowohl ein Artikel überschüssig ist als auch Artikel fehlen, indem die soeben oben beschriebenen Vorgehensweisen kombiniert werden.

Außerdem kann die Bedienperson 32 in Leerlaufphasen des Kommissioniervorgangs leere oder fast leere Lagerbehälter 34 wieder befüllen. Dazu wird über die Einlagerungs-Förderstrecke 66 ein entsprechender Einlagerungsbehälter 70 in Richtung des Kommissionierplatzes 30 transportiert. Sollte sich durch das Nachfüllen des Lagerbehälters 34 der Einlagerungsbehälter 70 leeren, so kann der Einlagerungsbehälter 70 von der Kommissionierperson auf die Korrektur-Förderstrecke 64 gestellt werden, von wo aus der leere Einlagerungsbehälter 70 über den Knoten 68 und den Ablauf 52b vom Kommissionierplatz weg transportiert wird. Ggf. ist es auch möglich, einen (vollen) Einlagerungsbehälter 70 von der Einlagerungs-Förderstrecke 66 zu nehmen und ihn auf die Lagerbehälter-Förderstrecke 34 zu setzen. Der Einlagerungsbehälter 70 fungiert dann als Lagerbehälter 34. Außerdem können dann leere Lagerbehälter 34 ebenfalls zum Abtransport auf die Korrektur-Förderstrecke 64 gestellt werden.

Eine weitere Funktion der Korrektur-Förderstrecke 64 ist es, Auftragsbehälter 40, die noch nicht vollständig kommissioniert sind, zur Nachkommissionierung über die Korrektur-Förderstrecke 64 zur Kommissionierperson 32 zu transportieren. Auf diese Weise können Artikel, sogenannte Sonderartikel, in einen Auftragsbehälter 40 kommissioniert werden, die zum Beispiel räumlich nicht in einen der Kommissionierschächte 42 passen. Über die Hauptförderstrecke 61 und die Einlagerungs-Förderstrecke 66 könnten Lagerbehälter 34 zur Kommissionierperson 32 transportiert werden, die die Sonderartikel enthalten. Vorzugsweise ist dazu die Hauptförderstrecke 61 mit der Lagerbehälter-Förderstrecke 36 verbunden. Eine solche Verbindung ist in der Fig. 4 jedoch nicht dargestellt.

Nachdem die Kommissionierperson 32 den (sperrigen) Sonderartikel in dem auf der Korrektur-Förderstrecke 64 wartenden Auftragsbehälter 40 deponiert hat, kann der Auftragsbehälter 40 abtransportiert werden. Der Lagerbehälter 34, der den oder die sperrigen Artikel beinhaltet, kann von der Bedienperson 32 von der Einlagerungs-Förderstrecke 66 auf die Lagerbehälter-Förderstrecke 36 zum Transport in das Behälterlager 56 gehoben werden.

Die Einlagerungs-Förderstrecke 66 wird hier auch für die Einlagerung von Artikeln benutzt, die aus nicht sortenreinen Einlagerungsbehältern 70 stammen. Ein nicht sortenreiner Einlagerungsbehälter 70 enthält zumindest zwei Artikel, die nicht gleich sind. Sortenreine Einlagerungsbehälter 70, die mehrere Artikel von ein und demselben Typ aufweisen, könnten direkt von der Hauptförderstrecke 61 über eine (nicht dargestellte) Verbindung in die Lagerbehälter-Förderstrecke 36 eingeschleust werden, um das Behälterlager 56 zu füllen bzw. wieder aufzufüllen.

Über die Einlagerungs-Förderstrecke 66 könnten auch sogenannte "Retouren" wieder eingelagert werden. Dazu könnte die Kommissionierperson 32 die Artikel der "Retoure" erfassen und in entsprechend zugeführte Lagerbehälter 34 zur Lagerung im Behälterlager 56 kommissionieren.

Der in der Figur 4 gezeigte Kommissionierplatz 30 unterscheidet sich vom Kommissionierplatz der Figur 3 insofern, dass zwei Pufferbereiche 72 im Puffer 44 vorgesehen sind. Die Pufferbereiche 72 sind entlang der Längsseite der Shuttlegasse 50 angeordnet. Das Shuttle 46 der Figur 4 unterscheidet sich vom Shuttle der Figur 3 insofern, dass das Shuttle 46 der Figur 4 gleichzeitig zwei oder mehr Auftragsbehälter 40 transportieren kann.

Im Falle, dass das Shuttle 46 zwei Auftragsbehälter 40 gleichzeitig transportieren kann, eröffnen sich eine Vielzahl von Möglichkeiten. Das Shuttle 46 könnte gleichzeitig einen leeren Auftragsbehälter 40 vom Zulauf 52a aufnehmen und einen fertig kommissionierten Auftragsbehälter 40, der aus dem Puffer 44 stammt, an den Ablauf 52b abgeben. Ferner kann das Shuttle 46 dann im Puffer 44 gleichzeitig einen leeren Auftragsbehälter 40 an einen der leeren Plätze im Puffer 46 abgeben, während ein fertig kommissionierter Auftragsbehälter 40 aufgenommen wird.

Das Shuttle 46 kann einen leeren Auftragsbehälter 40, der vom Zulauf 52a kommt, direkt an den Ablauf 52b geben. Dabei wird der leere Auftragsbehälter 40 nicht in den Puffer 44 eingelagert. Auf diese Weise lassen sich Auftragsbehälter 40, die sich im Puffer 44 befinden, umgehen bzw. überholen.

Eine solche Vorgehensweise ist dann von Vorteil, wenn ein Auftragsbehälter 40 mit höchster Priorität, was den Kommissionierauftrag betrifft, abgearbeitet werden muss. Der prioritätshöhere (leere) Auftragsbehälter 40 wird über den Zulauf 52a, das Shuttle 46, den Ablauf 52b und dann über die Korrektur-Förderstrecke 64 zur Kommissionierperson 32 transportiert. Die Kommissionierperson 32 kommissioniert aus entsprechend an den Kommissionierplatz 30 transportierten Lagerbehältern 34 die Artikel mit hoher Priorität in den wartenden Auftragsbehälter 40. Der Auftragsbehälter 40 mit hoher Priorität wird nach Beendigung des Kommissioniervorgangs über die Auftragsbehälter-Förderstrecke 52 abtransportiert.

Außerdem könnte, während ein Auftragsbehälter 40 im Puffer 44 aufgenommen oder abgegeben wird, ein anderer Auftragsbehälter 40, der sich im oberen oder unteren Bereich 72 des Puffers 44 befindet, den entsprechenden Bereich 72 wechseln, um den Puffer dynamisch zu verwalten. Solche Vorgänge könnten von einer übergeordneten Steuerung 74 kontrolliert werden, die in der Figur 4 anhand einer Wolke schematisch angedeutet ist.

Jedoch ist auch eine statische Verwaltung des Pufferspeichers 44 möglich, bei der ein in den Puffer 44 gebrachter Auftragsbehälter 40 während seines Kommissioniervorgangs ständig ein und denselben Platz im Puffer 44 beibehält. Dem Benutzer der Kommissionieranlage 54 steht es frei, wie er den Puffer 44 verwalten möchte.

Die Lastaufnahmemittel 48 des Shuttles 46 bewegen auf ihnen gelagerte Auftragsbehälter 40 bevorzugterweise quer zur Ausrichtung der Shuttlegasse 50.

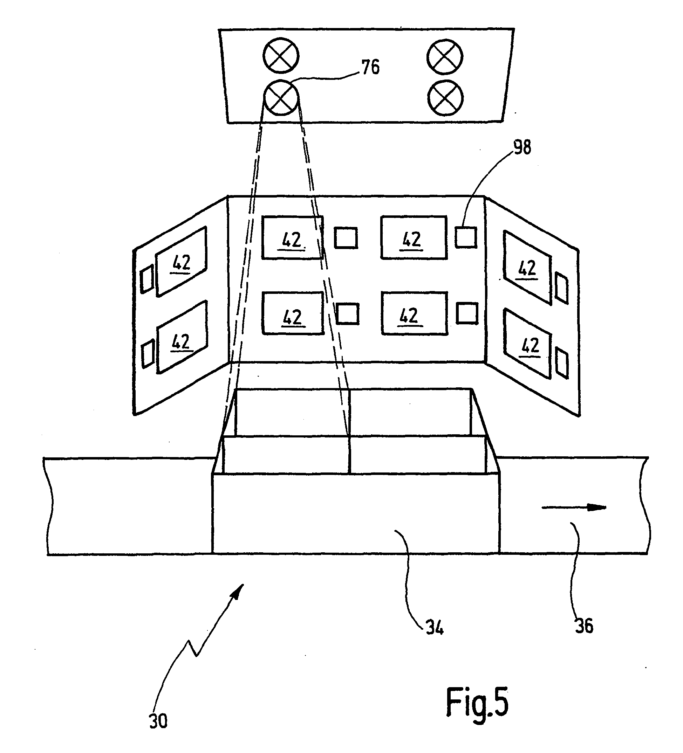

Figur 5 zeigt schematisch eines Teils einer weiteren Ausführungsform eines Kommissionierplatzes 30 gemäß der vorliegenden Erfindung.

Der Kommissionierplatz 30 weist eine Vielzahl von Kommissionierschächten 42 auf, die vorzugsweise jeweils einem einzigen (nicht dargestellten) Auftragsbehälter 40 zugeordnet sind. Die Kommissionierschächte 42 sind ergonomisch um den Arbeitsplatz der Kommissionierperson herum angeordnet, indem eine erste Anzahl von Schächten direkt hinter dem Lagerbehälter liegt und weitere Schächte seitlich schräg hierzu ausgerichtet sind.

Der (nicht dargestellten) Kommissionierperson 32 kann über ein Lichtelement 76, wie zum Beispiel einen Laser, angezeigt werden, aus welchem Fach eines Lagerbehälter 34 die Kommissionierperson 32 einen Artikel zu entnehmen hat. Seitlich von den Kommissionierschächten 42 ist jeweils ein Anzeigeelement 78 angebracht. Das Anzeigeelement 78 des Kommissionierschachts 42, in den kommissioniert werden soll, zeigt die Anzahl der zu kommissionierenden Artikel an. Im Beispiel der Figur 5 sollen zwei Artikel in den Kommissionierschacht 42 eingeworfen werden, der sich oben rechts im mittleren Kommissionierschachtfeld befindet.

Nachdem dieser Kommissioniervorgang beendet ist, wird der Lagerbehälter 34 über die Lagerbehälter-Förderstrecke 36 abtransportiert und ein neuer Lagerbehälter 34 kann zum Kommissionierplatz 30 transportiert werden, wodurch ein neuer Kommissioniervorgang durchgeführt werden kann.

In der Regel werden die Auftragsbehälter 40 im Puffer 44 vollständig fertig kommissioniert. Jedoch könnten auch nicht vollständig kommissionierte Auftragsbehälter 40 den Puffer 44 verlassen, um an einem anderen Ort fertig kommissioniert zu werden.

## Patentansprüche

1. Kommissionierplatz (30), zu dem über eine Lagerbehälter-Förderstrecke (36) Lagerbehälter (34) transportierbar sind und von dem über eine Auftragsbehälter-Förderstrecke (61, 52) Auftragsbehälter (40), in die hinein von einer Kommissionierperson (32) aus den Lagerbehältern (34) Artikel (38a, 38b) kommissioniert werden, abtransportierbar sind, wobei der Kommissionierplatz (30) einen Puffer (44) für mehrere zu kommissionierende Auftragsbehälter (40) aufweist, wobei die Auftragsbehälter (40) mittels eines Shuttles (46) in den Puffer (44) ein- und/oder auslagerbar sind, **dadurch gekennzeichnet, dass** das Shuttle (46) zwischen einen Zulauf (52a) und einen Ablauf (52b) der Auftragsbehälter-Förderstrecke (61, 52) geschaltet ist und das Shuttle (46) den Zulauf (52a) direkt mit dem Ablauf (52b) verbindet, um eine Förderstreckenschleife (62) mit der Auftragsbehälter-Förderstrecke (61, 52) zu bilden.

2. Kommissionierplatz nach Anspruch 1, **dadurch gekennzeichnet, dass** das Shuttle (46) mindestens ein Lastaufnahmemittel (48) aufweist, mit dem mindestens ein Auftragsbehälter (40) aufgenommen und/oder abgegeben werden kann.

3. Kommissionierplatz nach einem der vorherigen Ansprüche, **dadurch gekennzeichnet, dass** der Puffer (44) zwei Bereiche (72) zur Aufnahme von jeweils wenigstens einem Auftragsbehälter (46) aufweist, zwischen denen das Shuttle (46) beweglich angeordnet ist.

4. Kommissionierplatz nach einem der vorherigen Ansprüche, **dadurch gekennzeichnet, dass** der Kommissionierplatz (30) mehrere Kommissionierschächte (42) aufweist, durch die Artikel (38a, 38b) jeweils in einen der Auftragsbehälter (40) leitbar sind.

5. Kommissionierplatz nach Anspruch 4, **dadurch gekennzeichnet, dass** jedem Auftragsbehälter (40) des Puffers (44) jeweils ein einziger Kommissionierschacht (42) zugeordnet ist.

6. Kommissionierplatz nach einem der vorherigen Ansprüche, **dadurch gekennzeichnet, dass** der Kommissionierplatz (30) ferner eine Korrektur-Förderstrecke (64) zum Nachkommissionieren fehlerhaft kommissionierter Auftragsbehälter (40) aufweist, die den Griffbereich der Kommissionierperson (32) durchläuft.

7. Kommissionierplatz nach Anspruch 6, **dadurch gekennzeichnet, dass** der Kommissionierplatz (30) mit einer Einlagerungs-Förderstrecke (66) verbunden ist, über die dem Kommissionierplatz (30) Einlagerungsbehälter (70) zuführbar sind, um Lagerbehälter (34), die sich auf der Lagerbehälter-Förderstrecke (36) befinden, wieder aufzufüllen.

8. Kommissionierplatz nach einem der vorherigen Ansprüche, **dadurch gekennzeichnet, dass** sich das Shuttle (46) entlang einer Shuttlegasse (50) bewegt.

9. Kommissionierplatz nach einem der vorherigen Ansprüche, **dadurch gekennzeichnet, dass** ein einziges Shuttle (46) für mehrere Puffer (44) zuständig ist.

10. Kommissionieranlage (54) mit mindestens einem Kommissionierplatz (30) gemäß einem der Ansprüche 1 bis 9.

## Claims

1. An order-picking station (30), to which storage containers (34) can be transported over a storage container conveyor line (36) and from which order container (40) can be transported away over an order-container conveyor line (61), wherein articles (38a, 38b) are picked from the storage containers (34) into the order containers (40) by an order-picking person (32), wherein the order-picking station (30) has a buffer (44) for accomodating several of said order containers to be picked, wherein said order containers (40) can be stored in and/or retrieved from said buffer (44) by means of a shuttle (46), **characterized in that** the shuttle (46) is connected between an inlet (52a) and an outlet (52b) of the order-container conveyor line (61, 52), and the shuttle (46) connects the inlet (52a) directly with the outlet (52b) for forming a conveyor-line loop (62) together with the order-container conveyor line (61, 52).

2. The order-picking station of claim 1, **characterized in that** the shuttle (46) has at least one load-lifting means (48) allowing receipt and/or release of at least one order container container (40).

3. The order-picking station of any of the preceding claims, **characterized in that** the buffer (44) has two regions (72) for respectively receiving at least one order container (46), the shuttle (46) being arranged movably therebetween.

4. The order-picking station of any of the preceding claims, **characterized in that** the order-picking station (30) has several order-picking buckets (42) through which the articles (38a, 38b) can be guided into each of the order containers (40).

5. The order-picking station of claim 4, **characterized in that** each order container (40) of the buffer (44) is respectively assigned to a single bucket (42).

6. The order-picking station of any of the preceding claims, **characterized in that** the order-picking station (30) further comprises a correction-conveyor line (64) for re-picking order containers picked incorrect, the correction-conveyor line passing through a grab region of order-picking person.

7. The order-picking station of claim 6, **characterized in that** the order-picking station (30) is connected to a storage-conveyor line (66) being designated to supply containers (70) to be stored to the order-picking station (30) in order to refill storage containers (34) located on the storage-container conveyor line (36).

8. The order-picking station of any of the preceding claims, **characterized in that** the shuttle (46) moves along a shuttle aisle (50).

9. The order-picking station of any of the preceding claims, **characterized in that** one single shuttle (46) is responsible for several buffers (44).

10. An order-picking system (54) having at least one order-picking station (30) according to any of the claims 1 to 9.

## Revendications

1. Emplacement de préparation de commande (30), vers lequel des conteneurs de stockage (34) peuvent être transportés par l'intermédiaire d'une voie de convoyage (36) de conteneur de stockage et à partir duquel des conteneurs de commande (40), dans lesquels des articles (38a, 38b) provenant des conteneurs de stockage (34) sont préparés conformément à une commande par une personne affectée à la préparation de commande (32), peuvent repartir par l'intermédiaire d'une voie de convoyage (61, 52) de conteneur de commande, l'emplacement de préparation de commande (30) présentant une zone tampon (44) pour plusieurs conteneurs de commande (40) à préparer conformément à des commandes, les conteneurs de commande (40) pouvant être stockés et/ou déstockés dans la zone tampon (44) grâce à une navette (46), **caractérisé en ce que** la navette (46) est manoeuvrée entre une arrivée (52a) et une sortie (52b) de la voie de convoyage de récepteur de commande (61, 52) et la navette (46) relie l'arrivée (52a) directement avec la sortie (52b), pour former avec la voie de convoyage de conteneur de commande (61, 52) une boucle de voie de convoyage (62).

2. Emplacement de préparation de commande selon la revendication 1, **caractérisé en ce que** la navette (46) présente au moins un dispositif d'accueil de charge (48), avec lequel au moins un conteneur de commande (40) peut être accueilli et/ou libéré.

3. Emplacement de préparation de commande selon l'une quelconque des revendications précédentes, **caractérisé en ce que** la zone tampon (44) présente deux secteurs (72) pour l'accueil de respectivement au moins un conteneur de commande (46), entre lesquels la navette (46) est disposée de manière mobile.

4. Emplacement de préparation de commande selon l'une quelconque des revendications précédentes, **caractérisé en ce que** l'emplacement de préparation de commande (30) présente plusieurs goulottes de préparation de commande (42), grâce auxquelles des articles (38a, 38b) peuvent être guidés respectivement dans un des conteneurs de commande (40).

5. Emplacement de préparation de commande selon la revendication 4, **caractérisé en ce qu'**une goulotte unique de préparation de commande (42) est assignée respectivement à chaque conteneur de commande (40) de la zone tampon (44).

6. Emplacement de préparation de commande selon l'une quelconque des revendications précédentes, **caractérisé en ce que** l'emplacement de préparation de commande (30) présente en outre une voie de convoyage de correction (64) traversant la zone de préhension de la personne affectée à la préparation de commande (32), pour repréparer conformément à une commande des conteneurs de commande (40) préparés non conformément à cette commande.

7. Emplacement de préparation de commande selon la revendication 6, **caractérisé en ce que** l'emplacement de préparation de commande (30) est relié avec une voie de convoyage de stockage (66), par l'intermédiaire de laquelle des conteneurs de stockage (70) peuvent être amenés à l'emplacement de préparation de commande (30), pour remplir à nouveau des conteneurs de stockage (34) qui se trouvent sur la voie de convoyage de conteneur de stockage (36).

8. Emplacement de préparation de commande selon l'une quelconque des revendications précédentes, **caractérisé en ce que** la navette (46) se déplace le long d'un passage de navette (50).

9. Emplacement de préparation de commande selon l'une quelconque des revendications précédentes, **caractérisé en ce qu'**une navette (46) unique est affectée à plusieurs zones tampon (44).

10. Installation de préparation de commande (54) comportant au moins un emplacement de préparation de commande (30) selon l'une quelconque des revendications 1 à 9.
